# NEUE EUROPÄISCHE PATENTSCHRIFT

(11) **EP 0 751 189 B2**
(45) Veröffentlichungstag und Bekanntmachung des Hinweises auf die Entscheidung über den Einspruch: **01.12.2004**
(45) Hinweis auf die Patenterteilung: 26.09.2001
(21) Anmeldenummer: 96109681.5
(22) Anmeldetag: 17.06.1996
(51) Int. Cl.: C09B 67/20, C09C 3/00

(54) **Pulverförmige Pigmentzubereitung**
Pulverulent pigment composition
Compositions de pigments sous forme de poudre

(30) Priorität: 27.06.1995 DE 19523204
(43) Veröffentlichungstag der Anmeldung: 02.01.1997
(73) Patentinhaber: Clariant GmbH, 65929 Frankfurt am Main (DE)
(72) Erfinder: Schneider, Manfred, 65817 Eppstein (DE); Schnaitmann, Dieter, Dr., 65817 Eppstein (DE); Klein, Rainer, 65510 Idstein (DE); Münkel, Albert, 65835 Liederbach (DE)

(56) Entgegenhaltungen:
- EP-A- 0 013 909
- EP-A- 0 044 025
- EP-A- 0 582 928
- DE-A- 2 200 322
- DE-A- 2 608 993
- DE-A- 3 839 865

## Beschreibung

Die Erfindung betrifft leicht verteilbare pulverförmige Pigmentzubereitungen zum Pigmentieren von Putzen und Bautenanstrichdispersionen auf Kunstharzbasis.

Stand der Technik für die Pigmentierung von Putzen und Dispersionsfarben sind wäßrige Pigmentdispersionen, welche zum Anfärben in die Weißdispersion eingerührt und vermischt werden. Als Pigmente können z.B. Azo-, verlackte Azo-, Naphthol-, Isoindolinon-, Isoindolin-, Phthalocyanin-, Chinacridon-, Chinophthalon-, Diketopyrrolopyrrolpigmente, aber auch anorganische, insbesondere Oxidpigmente, als wäßrige oder wäßrig-organische Präparationen eingesetzt werden.

Bei der Herstellung der bekannten Pigmentdispersionen werden zum Dispergieren die üblichen anionischen, kationischen oder nichtionischen Dispergiermittel, alleine oder in Kombination, eingesetzt, beispielsweise Alkylsulfate, Alkylsulfonate, Alkylphosphate, Alkylbenzolsulfonate, Octadecylphosphate, Dodecylbenzolsulfonate und Sulfobernsteinsäureester, Kondensationsprodukte aus Fettsäure und Taurin oder Hydroxyethansulfonsäure sowie Umsetzungsprodukte aus oxethylierten Alkylphenolen und Fettalkoholen mit Chlorsulfonsäure und Phosphoroxychloriden (Winnacker, Küchler, "Chemische Technologie", Bd. 4, Carl Hanser Verlag, München 1960). Als kationische Tenside kommen quarternäre Ammoniumsalze wie z.B. Hexadecyltrimethylammoniumchlorid zur Anwendung. Die Herstellung der wäßrigen Präparationen geschieht in bekannter Weise in Dispergieraggregaten wie Dissolver. Rotor-Stator Mühle, Rührwerkskugelmühlen. Turbulentschnellmischer, Knetapparaten oder Walzenstühlen.

Die wäßrigen Präparationen enthalten teilweise organische Lösungsmittel wie z.B. Glykole, Propylenglykol, das als Eintrocknungsverhinderer oder zur Erhöhung der Gefrierbeständigkeit zugesetzt wird, bereitet Geruchsprobleme und kann in non-VOC (volatile organic compound)-Präparationen nicht eingesetzt werden.

Werden diese flüssigen Präparationen nach Einstellung einer sprühfähigen Viskosität z.B. in einem Sprühtrockner zu einem Pulver getrocknet, so resultieren nur in Ausnahmefällen rieselfähige Pulver, welche darüberhinaus nicht die geforderten anwendungstechnischen Eigenschaften aufweisen. Es kommt oftmals zu Störungen beim Sprühvorgang durch Verstopfen der Düse, Ablagerungen an der Sprühturmwandung oder Zusammenklumpen des Sprühgutes. Auch durch Optimierung der Pigment/Dispergiermittelverhältnisse erhält man nach Sprühtrocknung nur unzureichend rieselfähige Pigmentpulver, welche die geforderten anwendungstechnischen Eigenschaften hinsichtlich Flockungsstabilität, Verteilbarkeit und Coloristik in den Anwendungsmedien nicht erfüllen.

Mangelhafte Dispergiereigenschaften können z.B. durch Reagglomerierung der Dispersion beim Sprühprozess oder beim Einführen des Sprühgutes durch schlechtes Benetzen in den Weißdispersionen hervorgerufen werden. Die DE-A-3839865 beschreibt pulverförmige, auf Pigment aufgezogene Polyvinylalkohole. Hierbei handelt es sich meist um anorganische Weißpigmente, welche auf Grund der geringen Teilchengröße ohne Vordispergierung getrocknet werden können. Entsprechend behandelte organische Pigmente weisen mangelhafte Dispergiereigenschaften und unzureichende Koloristik in den in Rede stehenden Anwendungsmedien auf. Es bestand daher ein Bedürfnis nach Pigmentpulverpräparationen, die sich durch einfaches Einrühren in Dispersionsfarben schnell und rückstandsfrei verteilen lassen und damit flockungsstabile, stippen-, streilen- und fleckenfreie Anstriche liefern.

Aufgabe der vorliegenden Erfindung war es. staubarme pulverförmige Pigmentzubereitungen zu finden. welche sich leicht in Kunstharzdispersionen und Putze einrühren lassen und flockungsstabile, stippen- und streifenfreie Anstriche ergeben.

Es wurde gefunden. daß nachstehend definierte Pigmentzubereitungen überraschenderweise die gestellte Aulgabe lösen.

Gegenstand der vorliegenden Erfindung sind pulverförmige Pigmentzubereitungen, enthaltend
a) ein organisches oder anorganisches Pigment,
b) eine Verbindung aus der Gruppe der Novolake. der Bisphenol-polyglykolether, oxalkylierten Fettalkohole. oxalkylierten Fettamine, oder der aus einem natürlichen oder modifizierten Rizinusölfettkörper hergestellten Veresterungs- und/oder Arylierungsprodukte, welche oxalkyliert und gegebenenfalls durch Veresterung mit Dicarbonsäuren zu wiederkehrenden Struktureinheiten verknüpft sind,
c) ein wasserlösliches Gemisch aus Polyvinylalkohol und Vinylalkohol oder von Vinylalkoholcopolymerisaten und
d) gegebenenfalls weitere übliche Zusatzstoffe, wobei die Summe aller Komponenten 100 Gew.-% ergibt.

Von besonderem Interesse sind pulverförmige Pigmentzubereitungen, bestehend aus
25 bis 80 Gew.-%, vorzugsweise 35 bis 70 Gew.-%, der Komponente a),
3 bis 40 Gew.-%, vorzugsweise 10 bis 30 Gew.-%, der Komponente b),
2 bis 40 Gew.-%, vorzugsweise 10 bis 30 Gew.-%, der Komponente c) und
0 bis 7 Gew.-%, vorzugsweise 2 bis 5 Gew.-%, der Komponente d).

Als anorganische Pigmente kommen Oxidpigmente, z.B. Eisenoxid, Nickeltitanoxid, Chromtitanoxid, Chromoxidgrün oder Cobaltblau in Betracht. Als organische Pigmente kommen insbesondere Monoazo-, Disazo-, verlackte Azo-, Benzimidazolon-, Naphthol-, Isoindolinon-, Isoindolin-, Phthalocyanin-, Chinacridon-, Perylen-, Perinon-, Thioindigo-, Chinophthalon-, Dioxazin- und Diketopyrrolopyrrol-Pigmente in Betracht.

Als Novolake sind für die vorliegende Erfindung vorzugsweise die in EP-A-0 065 751 und DE-A-2 901 462 beschrieben oxalkylierten Aldehyd-Alkylphenol-Kondensate von Interesse, insbesondere Alkylphenolnovolakpolyglykolether, ein 7-Kern-Novolak mit 105 Ethylenoxid-Einheiten (EO), anschließend zum Benzoesäureteilester und Sulfobernsteinsäurehalbester-Na-Salz umgesetzt (Beispiel 3.5.3 in EP-A-0 065 751) und ein 7-Kern-Novolak mit 105 EO wie in Beispiel 2 der DE-A-2 901 462.

Bisphenol-polyglykolether sind beispielsweise in DE-A-3 026 127 (US-PS 4 960 935), Beispiel 1, sowie in DE-A-2 913 176 (CA-A-1 158 384), Beispiel 1 beschrieben.

Als oxalkylierte Fettalkohole werden vorzugsweise C₁₂-C₁₈-Fettalkohole mit 2 bis 50 Ethylenoxid- und/oder Propylenoxid-Einheiten eingesetzt.
Als oxakylierte Fettamine werden vorzugsweise C₈-C₂₂-Fettamine mit 2 bis 30 Ethylenoxid- und/oder Propylenoxid-Einheiten eingesetzt.

Der vorstehend beschriebene veresterte und oxalkylierte Rizinusölfettkörper besteht vorzugsweise aus
1 bis 10 Einheiten der Formel (la) 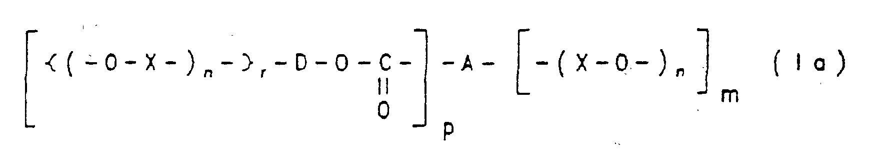
1 bis 72 monovalenten Resten der Formel (Ib)

   -Z (Ib),

   und im Falle des Vorhandenseins von zwei oder mehreren Einheiten der Formel (la) zusätzlich aus
1 bis 9 divalenten Gruppen der Formel (Ic)

   - CO-E-CO- (Ic),
wobei jede der gezeigten freien Valenzen in den Formeleinheiten (la) so definiert ist, daß sie unabhängig voneinander mit jeweils einer Formeleinheit (Ib) oder einer Valenz der Formeleinheit (Ic) direkt verbunden ist, und wobei in den Formeleinheiten (Ia) bis (Ic)
- A: für den Rest eines natürlichen oder modifizierten Rizinusöles oder für den Rest einer natürlichen oder modifizierten Rizinolsäure steht:
- D: für eine direkte Bindung oder für einen zweiwertigen Rest eines geradkettigen oder verzweigten 2- bis 6-wertigen Alkohols mit 2 bis 8 C-Atomen oder für einen zweiwertigen Rest eines Alkylolamins HO-(CH₂)ᵥ-[NH-(CH₂)ᵤ]ₐ-NH₂, 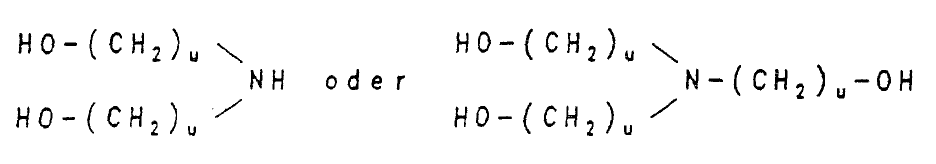 steht,
worin a für eine ganze Zahl von 0 bis 4,
u und v gleich oder verschieden sind und für eine ganze Zahl von 2 bis 14 stehen und wobei jede oder ein Teil der OH-, NH- oder NH₂-Gruppen oxalkyliert ist;
- E: für einen geradkettigen, verzweigten oder cyclischen aliphatischen Rest mit 0 bis 20 Kohlenstoffatomen;
für einen aromatischen Rest mit 6 bis 10 Kohlenstoffatomen;
für einen Alkenylrest auf Basis einer dimerisierten ungesättigten C₂₈-C₇₂-Fettsäure;
oder für eine Gruppe der Formeln -CH=CH-, -CH₂CH(SO₃M)- oder -CH(SO₃M)CH₂- steht, worin M ein Kation ist;
- X: für eine Gruppe der Formeln -CH₂CH₂-, -CH(CH₃)CH₂- oder -CH₂CH(CH₃)- oder für eine Kombination davon steht;
- Z: für gleiche oder verschiedene Reste Z¹ bis Z⁶ steht, worin
- Z¹: Wasserstoff,
- Z²: einen Acylrest der Formel R¹-CO-, in der R¹ einen Phenyl-, Naphthyl- oder Hydroxynaphthylrest bedeutet,
- Z³: einen Acylrest einer unmodifizierten oder modifizierten natürlichen Harzsäure,
- Z⁴: einen Acylrest einer Di- oder Tricarbonsäure auf Basis einer di- oder trimerisierten C₂₈-C₇₂-Fettsäure oder einen Acylrest einer gesättigten oder ungesättigten C₈-C₂₂-Fettsäure,
- Z⁵: gleiche oder verschiedene Reste der Formeln -CO-(CH₂)_{q}-COOM, -CO-CH=CH-COOM, -CO-CH₂-CH (SO₃M)-COOM, -CO-CH(SO₃M)-CH₂-COOM und -OC-C₆H₄-COOM bedeuten, worin q für eine ganze Zahl von 0 bis 10 steht,
worin M für Wasserstoff; ein Alkalimetall; ein Äquivalent eines Erdalkalimetalls; ein Oxalkylrest der Formel (X-O-)ₙH; eine Ammoniumgruppe, die unsubstituiert oder durch ein bis vier C₁-C₅-Alkylreste oder ein bis vier C₂-C₅-Alkylolreste substituiert ist; eine aus Ammoniak oder aus C₁-C₅-Alkylaminen oder C₂-C₅-Alkylolaminen durch Anlagerung von 1 bis 150 Ethylenoxid- oder Propylenoxideinheiten oder einer Kombination von Ethylenoxid- und Propylenoxideinheiten erhaltene Ammoniumgruppe; oder eine Gruppe der Formel (II) 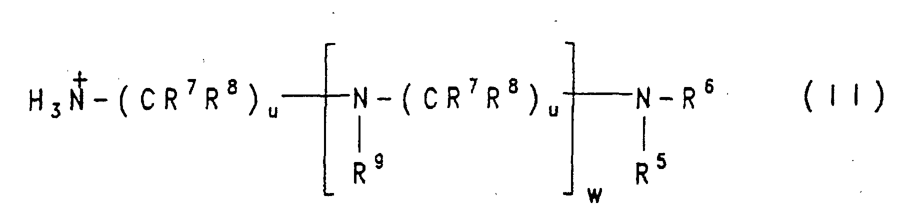 ist, worin R⁹, R⁵ und R⁶ gleich oder verschieden sind und für ein Wasserstoffatom oder eine Hydroxyalkylgruppe mit 1 bis 6 C-Atomen und R⁷ und R⁸ gleich oder verschieden sind und für Wasserstoff oder Methyl stehen, u jeweils gleich oder verschieden ist und eine ganze Zahl von 2 bis 14 bedeutet und w für eine ganze Zahl von Null bis 25 steht; oder worin M für eine Gruppe der Formel (III) steht 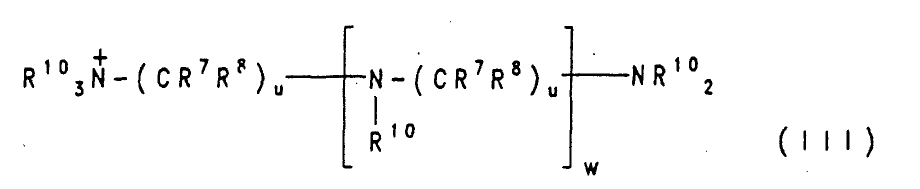 worin R¹⁰ die Gruppe H(-O-X-)_{y} bedeutet, worin X die vorstehend genannten Bedeutungen hat und y eine ganze Zahl von 1 bis 100 ist,
- m: im Falle, daß A ein Rizinolsäurerest ist, für die Zahl 1, und im Falle, daß A ein Rizinusölrest ist, für die Zahl 1 oder 2,
- n: für eine Zahl von 1 bis 250,
- p: im Falle, daß A ein Rizinusöl ist, für die Zahl 0, und im Falle, daß A ein Rizinolsäurerest ist, für die Zahl 1 und
- r: für eine Zahl von 1 bis 6 stehen,
und wobei mindestens ein Rest Z aus der Gruppe Z², Z³, Z⁴ und Z⁵ esterartig an A gebunden ist; oder wobei mindestens zwei Einheiten der Formel (la) über eine divalente Gruppe der Formel (Ic) miteinander verknüpft sind und Z die Bedeutungen von Z¹ bis Z⁵ hat.
Gegebenenfalls sind auch die Hydroxyendgruppen dieser Rizinusölfettkörper-Oxalkylate teilweise oder vollständig mit einem oder mehreren der Reste Z² bis Z⁵ verestert.

Die Herstellung der vorstehend beschriebenen veresterten und oxalkylierten Riziniusölfettkörper ist in EP-A-0 582 928 beschrieben.

Unter "Rizinusölfettkörper" wird natürliches oder modifiziertes Rizinusöl oder natürliche oder modifizierte Rizinolsäure verstanden. Unter modifiziertem Rizinusöl wird ein einfach oder mehrfach hydriertes oder ein einfach oder mehrfach aryliertes Rizinusöl verstanden. Unter modifizierter Rizinolsäure wird eine hydrierte oder arylierte Rizinolsäure verstanden. "Aryliert" bedeutet in diesem Zusammenhang, daß eine Phenolcarbonsäure, vorzugsweise eine Hydroxynaphthoesäure oder ein Derivat davon, an eine olefinische Doppelbindung des Rizinusölfettkörpers addiert ist.

Der der Gruppe A zugrundeliegende Rizinusölfettkörper ist beispielsweise handelsübliches Rizinusöl, bestehend im wesentlichen aus einem Glycerid der Rizinolsäure, Ölsäure, Linolsäure und Stearinsäure, oder ist einfach oder mehrfach hydriertes Rizinusöl, hydrierte Rizinolsäure oder mit Hydroxynaphthoesäuren oder Derivaten der Hydroxynaphthoesäuren einfach oder mehrfach aryliertes Rizinusöl oder einfach arylierte Rizinolsäure. Natürliches Rizinusöl enthält freie Hydroxylgruppen und olefinische Doppelbindungen.

Von besonderem Interesse sind erfindungsgemäß solche Verbindungen, die 1 bis 5 Einheiten der Formel (la) enthalten, worin
- A: für den Rest eines natürlichen oder modifizierten Rizinusöles steht und p daher die Zahl 0 bedeutet,
- X: für -CH₂CH₂- und
- n: für eine ganze Zahl von 5 bis 125, vorzugsweise 10 bis 80, stehen.

Von besonderem Interesse sind ferner solche Verbindungen, die 1 bis 5 Einheiten der Formel (la) enthalten, worin
- A: für den Rest einer natürlichen oder modifizierten Rizinolsäure steht und p die Zahl 1 bedeutet,
- D: für einen zweiwertigen Rest eines geradkettigen oder verzweigten 2- bis 6-wertigen Alkohols mit 2 bis 6 C-Atomen oder eines C₂-C₃-Alkylolamins, C₂-C₃-Alkylol-C₂-C₃-alkylendiamins, C₂-C₃-Alkylol-di-C₂-C₃-alkylentriamins oder C₂-C₃-Alkylol-tri-C₂-C₃-alkylen-tetramins,
- X: für -CH₂CH₂- und
- n: für eine ganze Zahl von 5 bis 125, vorzugsweise 10 bis 80, stehen.

Von besonderem Interesse sind weiterhin solche Verbindungen, die 2 bis 9 monovalente Reste der Formel (Ib) enthalten, worin Z für gleiche oder verschiedene Reste der Formeln Z², Z³, Z⁴ und Z⁵, vorzugsweise Z³ und Z⁵, steht.

Von besonderem Interesse sind ferner solche Verbindungen, die 1 bis 4 divalente Gruppen der Formel (Ic) enthalten, worin E für einen geradkettigen, verzweigten oder cyclischen aliphatischen Alkylenrest mit 2 bis 10 Kohlenstoffatomen, vorzugsweise Ethylen, Butylen, Pentylen, Hexylen und Decylen; für einen Phenylenrest; oder für eine Gruppe der Formeln -CH =CH-, -CH₂CH(SO₃M)- oder -CH(SO₃M)CH₂-, worin M ein Kation ist, steht.

Im Falle, daß als Ausgangsprodukt eine natürliche oder modifizierte Rizinolsäure eingesetztwird, ist es zweckmäßig, die freie Carboxylgruppe der Rizinolsäure durch einen dem Rest D zugrundeliegenden 2- bis 6-wertigen Alkohol oder ein Alkylolamin zu verestern. Die besagte Veresterung wird vor dem Oxalkylierungsschritt b) durchgeführt, wie in EP-A-0 582 928 beschrieben. Zur Veresterung der freien Carboxygruppen der Rizinolsäure sind von besonderem Interesse: Glyzerin, Diglyzerin, Polyglyzerine, 1,2,4-Butantriol, Butandiol-(1,4), Glykol, Polyglykole, 1,1,1-Trimethylolethan, 1,1,1-Trimethylolpropan, Pentaaerythrit, 2,4-Dihydroxy-3-methylol-pentan, Hexantriol, Sorbit, Anhydrosorbit, Hexit oder Mannit sowie Mono-, Di- und Triethanolamin und weiterhin Alkylolamine, wie N-(2-Hydroxyethyl)-1,2-diaminoethan, N-(2-Hydroxyethyl)-diethylentriamin, N-(2-Hydroxyethyl)-triethylentetramin und 2-Aminoethanol.

Die dem Acylrest Z² zugrundeliegenden aromatischen Carbonsäuren sind beispielsweise Benzoesäure, 1-Naphthoesäure oder 2-Naphthoesäure sowie Hydroxynaphthoesäuren, vorzugsweise 1-Hydroxy-4-naphthoesäure, 2-Hydroxy-1-naphthoesäure, 3-Hydroxy-1-naphthoesäure, 5-Hydroxy-1-naphthoesäure, 6-Hydroxy-1-naphthoesäure, 7-Hydroxy-1-naphthoesäure, 8-Hydroxy-1-naphthoesäure, 1 -Hydroxy-2-naphthoesäure, 3-Hydroxy-2-naphthoesäure, 5-Hydroxy-2-naphthoesäure, 6-Hydroxy-2-naphthoesäure, 7-Hydroxy-2-naphthoesäure und 1-Hydroxy-3-naphthoesäure.

Die dem Acylrest Z³ zugrundeliegenden Harzsäuren sind natürliche oder modifizierte Harzsäuren, beispielsweise Abietinsäure, Dehydroabietinsäure, Dihydroabietinsäure, Tetrahydroabietinsäure, Laevopimarsäure, Dextropimarsäure und Isodextropimarsäure, wie sie in handelsüblichen Kolophoniumarten vorliegen, weiterhin disproportionierte, hydrierte und dimerisierte Harzsäuren.

Die dem Acylrest Z⁴ zugrundeliegenden Fettsäuren sind dimerisierte oder trimerisierte Fettsäuren mit 28 bis 72, insbesondere 36 bis 54, Kohlenstoffatomen, sowie gesättigte oder ungesättigte C₈-C₂₂-Fettsäuren, beispielsweise Octansäure, Pelargonsäure, Caprinsäure, Undecansäure, Laurinsäure, Tridecansäure, Myristinsäure, Pentadecansäure, Palmitinsäure, Heptadecansäure, Stearinsäure, Nonadecansäure, Arachinsäure, Behensäure, 10-Undecensäure, Lauroleinsäure, Myristoleinsäure, Palmitoleinsäure, 6c- und 6t-Octadecensäure, Elaidinsäure, Ölsäure, Linolsäure und Linolensäure, insbesondere geradzahlige Fettsäuren oder Hydroxyfettsäuren mit jeweils 8 bis 20 C-Atomen, beispielsweise die entsprechend vorstehend genannten geradzahligen Fettsäuren sowie insbesondere ihre aus Naturprodukten gewonnenen Gemische, wie Tallölfettsäure, Talgfettsäure, Kokosölfettsäure, Palmölfettsäure und Leinölfettsäure, vorzugsweise die genannten Fettsäuren mit 12 bis 18 C-Atomen.

Die dem Acylrest Z⁵ zugrundeliegenden Säuren oder Carbonsäureanhydride sind beispielsweise Maleinsäure, Maleinsäureanhydrid, Fumarsäure, Phthalsäure, Phthalsäureanhydrid, Isophthalsäure, Terephthalsäure, Oxalsäure, Malonsäure, Bernsteinsäure, Bernsteinsäureanhydrid, Glutarsäure, Glutarsäureanhydrid, Adipinsäure, Pimelinsäure, Korksäure, Acelainsäure, Sebacinsäure und Sulfobernsteinsäure, vorzugsweise Bernsteinsäure, Phthalsäure, Terephthalsäure, Maleinsäure und Fumarsäure, insbesondere Sulfobernsteinsäure.

Von besonderem Interesse im Sinne der vorliegenden Erfindung sind Umsetzungsprodukte aus Rizinusöl oder Rizinolsäure mit einer dem Rest Z³ zugrundeliegenden Harzsäure, vorzugsweise einem Kolophoniumharz, und Ethylenoxid und/oder Propylenoxid sowie gegebenenfalls mit einer dem Rest Z⁵ zugrundeliegenden Dicarbonsäure. Beispiele für besonders bevorzugte Umsetzungsprodukte sind Rizinusölkolophoniumester-oxethylat-di-sulfobernsteinsäurehalbester, Di-kolophoniumrizinusöl-oxethylatsulfosuccinat, Rizinusöi-koiophoniumester-oxaikyiat-dimalelnsäurehalbester und dessen Triethylentetraminsalz, Rizinusöl-oxethylatbernsteinsäureester-oxethylat-kolophoniumester-sulfosuccinat und Rizinusölkolophonium-glycerinmischester. Die Herstellung dieser Produkte ist in EP-A-0 582 928 beschrieben.

Das wasserlösliche Gemisch aus Polyvinylalkohol und Vinylalkohol ist vorzugsweise ein teilhydrolysierter Polyvinylalkohol mit einem Hydrolysegrad von 70 bis 92 Mol-%, vorzugsweise 85 bis 90 Mol-%, und einer Auslaufviskosität (als 4 gew.-%ige wäßrige Lösung) von 2 bis 20 mPas. Das wasserlösliche Gemisch von Vinylalkohol-Copolymerisaten ist vorzugsweise ein Gemisch von teil- oder vollverseiften Copolymeren aus Alkylvinylester und Vinylacetat mit Alkylvinylesteranteilen von 5 bis 20 Mol-% (Auslaufviskositäten von 2 bis 20 mPas), insbesondere Copolymere aus Alkylvinylacetat und Vinylacetat. Beispiele für solche Produkte sind unter der CAS-Nr. 9002-89-5 und der CAS-Nr. 25213-24-5 angegeben.

Als weitere übliche Zusatzstoffe kommen beispielsweise Netzmittel, Entstaubungsmitel, Antischaummittel und Antibackmittel in Betracht.

Die Herstellung der erfindungsgemäßen Pigmentzubereitungen erfolgt in der Weise, daß man das Pigment, welches zweckmäßigerweise ein gefinishtes oder ungefinishtes, meist kommerziell erhältliches Pigmentpulver ist, in wäßrigem oder organisch-wäßrigem Medium bei einer Temperatur von 20 bis 60°C und einem pH-Wert von 4 bis 10 durch kontinuierliches oder diskontinuierliches Mahlen oder Kneten in einen feinverteilten Zustand überführt, wobei die unter b), c) und d) genannten Komponenten vor, während oder nach dem Feinverteilungsprozeß zugegeben werden, und die so erhaltene feinverteilte Pigmentdispersion durch ein geeignetes Verfahren unter Erzielung eines feinen rieselfähigen Pulvers zur Trockene überführt, beispielsweise durch Sprühtrocknung, Bandtrocknung oder Wirbelschichttrocknung.
Die Feinverteilung des Pigments wird zweckmäßig durch Mahlen und/oder Kneten der wäßrigen oder wäßrig-organischen, bevorzugt wäßrigen oder wäßrigalkoholischen, Suspension in einem geeigneten Kneter oder einer Naßmahlapparatur, beispielsweise einem Dispersionskneter oder einer Rührwerkskugelmühle, durchgeführt. Die Zugabe der Komponente b) erfolgt bevorzugt vor der Feinverteilung, der Komponente c) bevorzugt während oder/und nach der Feinverteilung und der Komponente d) bevorzugt während oder/und nach der Feinverteilung oder/und nach der Trocknung. Die gesamte Feststoffkonzentration in der Suspension beträgt zweckmäßig 15 bis 45, vorzugsweise 20 bis 30, Gew.-%. Die Mahl- oder Knetdauer beträgt üblicherweise ½ bis 4 Stunden. Feinverteilung ist im Normalfall erreicht, wenn nicht mehr als 3 % der Teilchen größer als 1 µm und keine Anteile größer als 3 *µ*m sind.

Die so hergestellten Suspensionen werden durch kontinuierliche Trocknung, bevorzugt durch Sprühtrocknung in einer geeigneten Sprühtrocknungsanlage, getrocknet. Dazu wird die Suspension im Normalfall mit Heißluft in einem Zweistoffsprühtrockner durch Einsatz von Sprühdüsen oder Zerstäubungsscheiben zu feinen Tröpfchen zerstäubt. Die optimale Gaseintrittstemperatur muß für jede Pigmentsuspension durch Vorversuche ermittelt werden. Üblich sind 140 bis 230°C.

Die Teilchengröße der sprühgetrockneten Produkte hängt von der Teilchengröße der eingesetzten Pigmentsuspension ab und wird zweckmäßigerweise rieselfähig und gut dosierbar durch die Wahl der Hilfsmittelkombination eingestellt.

Die Sprühtrocknung erfolgt ohne Fadenbildung und Wandablagerungen. Es resultieren pulverförmige, gut rieselfähige, nicht verbackende, hochkonzentrierte Pigmentzubereitungen.

Die erfindungsgemäßen, pulverförmigen Pigmentzubereitungen erfüllen,alle anwendungstechnischen Anforderungen, die an solche Zubereitungen gestellt werden. Die meist höheren Pigmentgehalte der Pulver im Vergleich zu den Flüssigeinstellungen verhalten sich in der erreichbaren Farbstärke im Verhältnis der Pigmentgehalte zueinander. Eine geringere Farbausbeute durch Retention der Hilfsmittel tritt nicht auf. Die Einarbeitung und Redispergierung der gut rieselfähigen und gut dosierbaren Pigmentzubereitungen in den verschiedenen, in der Praxis anzutreffenden weißen, üblicherweise TiO₂ oder BaSO₄ enthaltenden Dispersionsfarben, deren Basis beispielsweise modifizierte Polyvinylacetate, Acrylate oder Styrolacrylate sein können, erfolgt problemlos durch einfaches Einrühren. Beim Aufziehen oder Verstreichen resultieren stippen-, streifen- und fleckenfreie Anstriche.

Neben den ausgezeichneten anwendungstechnischen Eigenschaften haben die Pulverzubereitungen erhebliche wirtschaftliche und ökologische Vorteile. Es entfallen die entsorgungsaufwendigen Kunststoffgebinde, da die erfindungsgemäßen Pulverpräparationen in Papier verpackt werden können. Daneben gibt es deutliche Einsparungen bei der Lagerhaltung, da die Pulverzubereitungen im Pigmentgehalt oftmals doppelt so hoch eingestellt werden können wie die entsprechenden Flüssigeinstellungen. Pulver sind über einen längeren Zeitraum ohne Verwendung von ökologisch nicht ganz unbedenklichen Konservierungsmitteln ohne Qualitätseinbuße lagerfähig. Mangelnde Froststabilität, was bei Flüssigeinstellungen oft zu Störungen führt, tritt bei den Pulverzubereitungen auch über längere Zeiträume nicht auf. Da Pulver rückstandsfrei aus den entsprechenden Gebinden entnommen werden können, ist die Reinigung und Neubefüllung dieser Gebinde unproblematisch.

Es hatte in der Vergangenheit nicht an Versuchen gefehlt, pulverförmige Pigmentzubereitungen für die Einfärbung von Bautenanstrichfarben herzustellen, jedoch gab es stets große Probleme hinsichtlich der Redispergierbarkeit, der Rieselfähigkeit oder der erzielten Farbstärke. Erst die erfindungsgemäße Kombination der genannten Komponenten a) bis d) konnte überraschenderweise alle diese Probleme beseitigen.

### Beispiel 1

70 Teile C.I. Pigment Orange 5 (C.I. No. 12075) werden mit 100 Teilen entmineralisiertem Wasser, 16 Teilen einer 50 gew.-%igen wäßrigen Einstellung von Rizinusöl-kolophoniumester-oxethylat-di-sulfobernsteinsäurehalbester, wie in EP-A-0 582 928, Herstellungsbeispiel 2 beschrieben, und 70 Teilen einer 20 gew.-%igen wäßrigen Lösung eines teilhydrolysierten Polyvinylalkohols mit einem Hydrolysegrad von ca. 88% (die Viskosität einer 4 gew.-%igen wäßrigen Lösung bei 20°C ist 4 mPas), beispielsweise ®Mowiol 4-88, mit einem Dissolver angeteigt und anschließend in einer Rührwerkskugelmühle bis zur Feinverteilung gemahlen. Nach Abtrennen der Glasperlen und Nachspülen mit 80 Teilen Wasser wird die ca. 20 gew.-%ige Suspension in einem Zweistoffdüsen-Sprühtrockenturm getrocknet. Die Gaseintrittstemperatur beträgt 180 bis 185°C. Die Trocknung verläuft störungsfrei. Es resultieren 94 Teile eines staubarmen, gut rieselfähigen Pulvers.

3 Teile dieses Pulvers werden 5 Minuten von Hand in 100 Teile einer handelsüblichen Weißdispersionsfarbe eingerührt und ergeben einen farbstarken, flockungsstabilen stippenfreien Anstrich, welcher durch 2 minütiges Rühren mit einem Schnellrührer in der Farbstärke nur noch unwesentlich verbessert wird. Auch eine Erhöhung der Pigmentierung auf 10 % in der Weißdispersionsfarbe ergibt flockungsstabile, äußerst farbstarke und stippenfreie Anstriche.

### Beispiel 2

**65** Teile C.I. Pigment Red 112 (C.I. No. 12370) werden mit 70 Teilen entmineralisiertem Wasser, 15 Teilen einer 50 gew.-%igen wäßrigen Einstellung des Reaktionsproduktes aus Rizinusöl und Kolophonium, anschließend oxäthyliert mit ca. 80 Ethylenoxideinheiten pro Mol, wie in EP-A-0 582 928, Herstellungsbeispiel 1 beschrieben, 90 Teilen einer 20 gew.-%igen wäßrigen Lösung eines teilhydrolysierten Polyvinylalkohols mit einem Hydrolysegrad von ca. 88 Mol-% (die Viskosität der 4 gew.-%igen wäßrigen Lösung bei 20°C ist 4 mPas) und 2 Teilen eines wasserlöslichen Ammoniumsalzes einer niedermolekularen Polyacrylsäure mit einem Dissolver angeteigt und anschließend in einer Rührwerkskugelmühle mit 1 mm Siliquarzitperlen bis zur Feinverteilung wie in Beispiel 1 gemahlen. Nach Abtrennen der Glasperlen und Nachspülen mit 90 Teilen entmineralisiertem Wasser wird die ca. 20 gew.-%ige Dispersion in einem Zweistoffdüsen-Sprühtrockenturm getrocknet. Die Gaseintrittstemperatur beträgt 150 bis 155°C. Die Sprühtrocknung verläuft störungsfrei. Es resultiert ein staubfreies, gut rieselfähiges Pulver.

3 Teile dieses Pigmentpulvers werden innerhalb von 5 Minuten von Hand in 100 Teile verschiedener handelsüblicher Weißdispersionen eingerührt und ergeben einen farbstarken, stippenfreien Anstrich, welcher durch 2 minütiges Rühren mit einem Schnellrührer in der Farbstärke nur noch graduell verbessert werden kann.

### Beispiel 3

68,5 Teile C.I. Pigment Red 5 (C.I. No. 12490) werden mit 110 Teilen entmineralisiertem Wasser, 20 Teilen einer 50 gew.-%igen wäßrigen Einstellung des Reaktionsproduktes aus Rizinusöl und Kolophonium, anschließend oxethyliert mit ca. 80 Ethylenoxideinheiten pro Mol, wie in EP-A-0 582 928, Herstellungsbeispiel 1 beschrieben, 100 Teilen einer 20 gew.-%igen wäßrigen Lösung eines teilhydrolysierten Polyvinylalkohols mit einem Hydrolysegrad von ca. 88 Mol-%, wie in Beispiel 1 beschrieben, sowie 5 Teile einer 30 gew.-%igen wäßrigen Lösung eines Ammoniumsalzes einer niedermolekularen Polyacrylsäure mit einem Dissolver angeteigt und anschließend mit 1 mm-Siliquarzitperlen in einer Rührwerkskugelmühle bis zur Feinverteilung gemahlen (Teilchengröße von maximal 1 µm).
Nach Abtrennen der Glasperlen und Nachspülen mit 25 Teilen entmineralisiertem Wasser wird die Dispersion über einen Sprühtrockenturm getrocknet (Gaseintrittstemperatur 180 bis 185°C). Die Sprühtrocknung verläuft störungsfrei und es resultiert ein staubfreies, gut rieselfähiges Pulver, welches in verschiedenen handelsüblichen Weißdispersionenen eingerührt wird und einen flockungsstabilen, farbstarken, stippenfreien Anstrich ergibt.

Verwendet man anstelle des in Beispiel 1 angegebenen Pigmentes die in derfolgenden Tabelle angegebenen Pigmente und verfährt im übrigen wie vorher beschrieben, so erhält man ebenfalls staubarme, gut rieselfähige, hochkonzentrierte, leicht dispergierbare Pulverpräparationen mit ähnlich guten Eigenschaften, wie in Beispiel 1. Die Mahldauer der Suspension bis zur Feinverteilung wird durch das Pigment bestimmt und beträgt zwischen 30 und 90 Minuten.

Als Komponente b) werden eingesetzt:
A. Bisphenolpolyglykolether, hergestellt gemäß Beispiel 1 der US-PS 4 960 935;
B. Alkylphenolnovolakpolyglykolether, hergestellt gemäß Beispiel 2 der DE-A-2 901 462;
C. Rizinusöl-kolophoniumester-oxalkylat-di-maleinsäurehalbester-Triethylentetraminsalz, hergestellt gemäß EP-A-0 582 928, Beispiel 8;
D. 2-fach-Rizinolsäure-succinat-diglycerinester-oxethylat, hergestellt gemäß EP-A-0 582 928, Beispiel 19;
E. Di-kolophonium-rizinusölester-oxethylat-sulfosuccinat, hergestellt gemäß EP-A-0 582 928, Beispiel 4.

| Bsp. Nr. | Pigment | grenzflächenaktive Verbindung | teilhydrolysierter Polyvinylalkohol | zusätzliches Hilfsmittel |
|---|---|---|---|---|
| 4 | 65 % C.I. Pigment Green 7 (C.I. No. 74260) | 10 % Verbindung A | 25 % | - |
| 5 | 65 % C.I. Pigment Red 5 | 10 % Verbindung B | 23 % | Polyacrylsäure, Na-Salz |
| 6 | 65 % C.I. Pigment Yellow 74 (C.I. No. 11741) | 18 % Verbindung C | 17 % | - |
| 7 | 50 % C.I. Pigment Yellow 74 | 30 % Verbindung D | 20 % | - |
| 8 | 70 % Pigmentruß | 16 % Verbindung E | 14 % | - |
| 9 | 70 % C.I. Pigment Yellow 3 (C.I. No. 11710) | 10 % Verbindung E | 18 % | 2 % disperse Kieselsäure |
| 10 | 40 % C.I. Pigment Yellow 3 | 25 % Verbindung A | 30 % | 5 % disperse Kieselsäure |
| 11 | 70 % C.I. Pigment Yellow 42 (Oxidgelb) | 15 % Verbindung B | 15 % | - |
| 12 | 65 % C.I. Pigment Blue 15:3 (C.I. No. 74160) | 15 % Verbindung E | 16 % | 4 % Alkylammoniumsalz |

## Patentansprüche

1. Pulverförmige Pigmentzubereitung, enthaltend
a) ein organisches oder anorganisches Pigment,
b) eine Verbindung aus der Gruppe der Novolake, der Bisphenol-polyglykolether, oxalkylierten Fettalkohole, oxalkylierten Fettamine oder der aus einem natürlichen oder modifizierten Rizinusölfettkörper hergestellten Veresterungs- und/oder Arylierungsprodukte, welche oxalkyliert und gegebenenfalls durch Veresterung mit Dicarbonsäuren zu wiederkehrenden Struktureinheiten verknüpft sind,
c) ein wasserlösliches Gemisch aus Polyvinylalkohol und Vinylalkohol oder von Vinylalkoholcopolymerisaten und
d) gegebenenfalls weitere übliche Zusatzstoffe, wobei die Summe aller Komponenten 100 Gew.-% ergibt.

2. Pulverförmige Pigmentzubereitung nach Anspruch 1, bestehend aus
25 bis 80 Gew.-%, vorzugsweise 35 bis 70 Gew.-%, der Komponente a),
3 bis 40 Gew.-%, vorzugsweise 10 bis 30 Gew.-%, der Komponente b),
2 bis 40 Gew.-%, vorzugsweise 10 bis 30 Gew.-%, der Komponente c)
und 0 bis 7 Gew.-%, vorzugsweise 2 bis 5 Gew.-%, der Komponente d).

3. Pulverförmige Pigmentzubereitung nach Anspruch 1 oder 2, **dadurch gekennzeichnet, daß** das Pigment ein anorganisches Oxidpigment, ein Monoazo-, Disazo-, verlacktes Azo-, Benzimidazolon-, Naphthol-, Isoindolinon-, Isoindolin-, Phthalocyanin-, Chinacridon-, Perylen-, Perinon-, Thioindigo-, Chinophthalon-, Dioxazin- oder ein Diketopyrrolopyrrol-Pigment ist.

4. Pulverförmige Pigmentzubereitung nach mindestens einem der Ansprüche 1 bis 3, **dadurch gekennzeichnet, daß** die Komponente b) ein Alkylphenolnovolakpolyglykolether, ein Bisphenol-polyglykolether oder ein veresterter und oxalkylierter Rizinusölfettkörper ist, bestehend aus 1 bis 10 Einheiten der Formel (la) 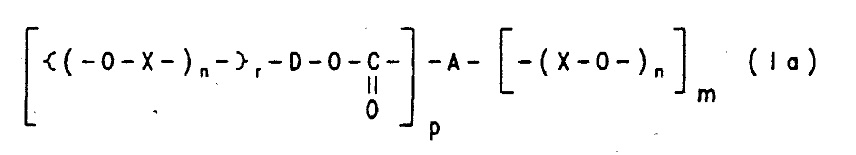 1 bis 72 monovalenten Resten der Formel (Ib)
- Z (Ib),
und im Falle des Vorhandenseins von zwei oder mehreren Einheiten der Formel (la) zusätzlich aus 1 bis 9 divalenten Gruppen der Formel (Ic)
- CO-E-CO- (Ic),
wobei jede der gezeigten freien Valenzen in den Formeleinheiten (la) so definiert ist, daß sie unabhängig voneinander mit jeweils einer Formeleinheit (Ib) oder einer Valenz der Formeleinheit (Ic) direkt verbunden ist, und wobei in den Formeleinheiten (la) bis (Ic)
A für den Rest eines natürlichen oder modifizierten Rizinusöles oder für den Rest einer natürlichen oder modifizierten Rizinolsäure steht;
D für eine direkte Bindung oder für einen zweiwertigen Rest eines geradkettigen oder verzweigten 2- bis 6-wertigen Alkohols mit 2 bis 8 C-Atomen oder für einen zweiwertigen Rest eines Alkylolamins HO-(CH₂)ᵥ-[NH-(CH₂)ᵤ]ₐ-NH₂, 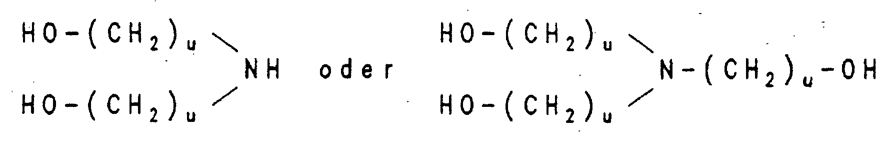 steht,
worin a für eine ganze Zahl von 0 bis 4,
u und v gleich oder verschieden sind und für eine ganze Zahl von 2 bis 14 stehen
und wobei jede oder ein Teil der OH-, NH- oder NH₂-Gruppen oxalkyliert ist;
E für einen geradkettigen, verzweigten oder cyclischen aliphatischen Rest mit 0 bis 20 Kohlenstoffatomen;
für einen aromatischen Rest mit 6 bis 10 Kohlenstoffatomen;
für einen Alkenylrest auf Basis einer dimerisierten ungesättigten C₂₈-C₇₂-Fettsäure;
oderfür eine Gruppe der Formeln -CH=CH-, -CH₂CH(SO₃M)- oder -CH(SO₃M)CH₂- steht, worin M ein Kation ist;
X für eine Gruppe der Formeln -CH₂CH₂-, -CH(CH₃)CH₂- oder -CH₂CH(CH₃)- oder für eine Kombination davon steht;
Z für gleiche oder verschiedene Reste Z¹ bis Z⁶ steht, worin
Z¹ Wasserstoff,
Z² einen Acylrest der Formel R¹-CO-, in der R¹ einen Phenyl-, Naphthyl- oder Hydroxynaphthylrest bedeutet,
Z³ einen Acylrest einer unmodifizierten oder modifizierten natürlichen Harzsäure,
Z⁴ einen Acylrest einer Di- oder Tricarbonsäure auf Basis einer di- oder trimerisierten C₂₈-C₇₂-Fettsäure oder einen Acylrest einer gesättigten oder ungesättigten C₈-C₂₂-Fettsäure,
Z⁵ gleiche oder verschiedene Reste der Formeln -CO-(CH₂)_{q}-COOM, -CO-CH = CH-COOM, -CO-CH₂-CH(SO₃M)-COOM, -CO-CH(SO₃M)-CH₂-COOM und -OC-C₆H₄-COOM bedeuten, worin q für eine ganze Zahl von 0 bis 10 steht,
worin M für Wasserstoff; ein Alkalimetall; ein Äquivalent eines Erdalkalimetalls; ein Oxalkylrest der Formel (X-O-)ₙH; eine Ammoniumgruppe, die unsubstituiert oder durch ein bis vier C₁-C₅-Alkylreste oder ein bis vier C₂-C₅-Alkylolreste substituiert ist; eine aus Ammoniak oder aus C₁-C₅-Alkylaminen oder C₂-C₅-Alkylolaminen durch Anlagerung von 1 bis 150 Ethylenoxid- oder Propylenoxideinheiten oder einer Kombination von Ethylenoxid- und Propylenoxideinheiten erhaltene Ammoniumgruppe; oder eine Gruppe der Formel (II) 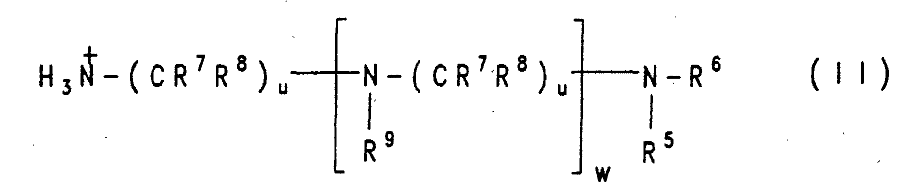 ist, worin R⁹, R⁵ und R⁶ gleich oder verschieden sind und für ein Wasserstoffatom oder eine Hydroxyalkylgruppe mit 1 bis 6 C-Atomen und R⁷ und R⁸ gleich oder verschieden sind und für Wasserstoff oder Methyl stehen, u jeweils gleich oder verschieden ist und eine ganze Zahl von 2 bis 14 bedeutet und w für eine ganze Zahl von Null bis 25 steht; oder worin M für eine Gruppe der Formel (III) steht 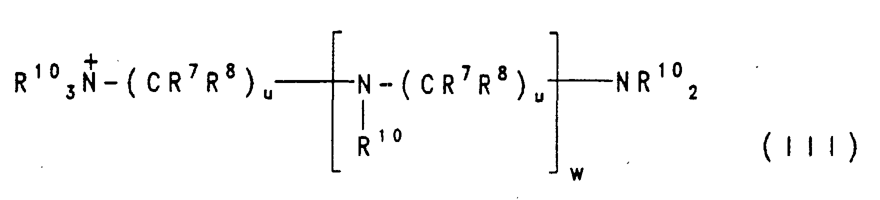 worin R¹⁰ die Gruppe H(-O-X-)_{y} bedeutet, worin X die vorstehend genannten Bedeutungen hat und y eine ganze Zahl von 1 bis 100 ist,
m im Falle, daß A ein Rizinolsäurerest ist, für die Zahl 1, und im Falle, daß A ein Rizinusölrest ist, für die Zahl 1 oder 2,
n für eine Zahl von 1 bis 250,
p im Falle, daß A ein Rizinusöl ist, für die Zahl 0, und im Falle, daß A ein Rizinolsäurerest ist, für die Zahl 1 und
r für eine Zahl von 1 bis 6 stehen,
und wobei mindestens ein Rest Z aus der Gruppe Z², Z³, Z⁴ und Z⁵ esterartig an A gebunden ist; oder wobei mindestens zwei Einheiten der Formel (la) über eine divalente Gruppe der Formel (Ic) miteinander verknüpft sind und Z die Bedeutungen von Z¹ bis Z⁵ hat.

5. Pulverförmige Pigmentzubereitung, nach Anspruch 4, **dadurch gekennzeichnet, daß** der veresterte und oxalkylierte Rizinusölfettkörper 1 bis 5 Einheiten der Formel (la) enthält, worin
A für den Rest eines natürlichen oder modifizierten Rizinusöles steht und p daher die Zahl 0 bedeutet,
X für -CH₂CH₂- und
n für eine ganze Zahl von 5 bis 125, vorzugsweise 10 bis 80, stehen.

6. Pulverförmige Pigmentzubereitung nach Anspruch 4, **dadurch gekennzeichnet, daß** der veresterte und oxalkylierte Rizinusölfettkörper 1 bis 5 Einheiten der Formel (I) enthält, worin
A für den Rest einer natürlichen oder modifizierten Rizinolsäure steht und p die Zahl 1 bedeutet,
D für einen zweiwertigen Rest eines geradkettigen oder verzweigten 2- bis 6-wertigen Alkohols mit 2 bis 6 C-Atomen odereines C₂-C₃-Alkylolamins, C₂-C₃-Alkylol-C₂-C₃-alkylendiamins, C₂-C₃-Alkylol-di-C₂-C₃-alkylentriamins oder C₂-C₃-Alkylol-tri-C₂-C₃-alkylen-tetramins,
X für -CH₂CH₂- und
n für eine ganze Zahl von 5 bis 125, vorzugsweise 10 bis 80, stehen.

7. Pulverförmige Pigmentzubereitung nach mindestens einem der Ansprüche 1 bis 6, **dadurch gekennzeichnet, daß** die Komponente b) Rizinusöl-kolophoniumester-oxethylat-di-sulfobernsteinsäurehalbester, Di-kolophoniumrizinusöl-oxethylatsulfosuccinat, Rizinusölkolophoniumester-oxalkylat-di-maleinsäurehalbester oder dessen Triethylentetraminsalz, Rizinusöl-oxethylat-bemsteinsäureester-oxethylatkolophoniumester-sulfosuccinat oder Rizinusöl-kolophoniumglycerinmischester ist.

8. Pulverförmige Pigmentzubereitung nach mindestens einem der Ansprüche 1 bis 7, **dadurch gekennzeichnet, daß** die Komponente c) ein teilhydrolysierter Polyvinylalkohol mit einem Hydrolysegrad von 70 bis 92 Mol-% oder ein teil- oder vollverseiftes Copolymer aus Alkylvinylester und Vinylacetat mit Alkylvinylesteranteilen von 5 bis 20 Mol-% ist.

9. Verfahren zur Herstellung einer pulverförmigen Pigmentzubereitung nach mindestens einem der Ansprüche 1 bis 8, **dadurch gekennzeichnet, daß** man das Pigment in wäßrigem oder wäßrig-organischem Medium durch kontinuierliches oder diskontinuierliches Mahlen oder Kneten in einen feinverteilten Zustand überführt, wobei die unter b), c) und d) genannten Komponenten vor, während oder nach dem Feinverteilungsprozeß zugegeben werden, und die so erhaltene feinverteilte Pigmentdispersion durch ein geeignetes Verfahren unter Erzielung eines feinen rieselfähigen Pulvers zur Trockene überführt.

10. Verfahren nach Anspruch 9, **dadurch gekennzeichnet, daß** diefeinverteilte Pigmentdispersion durch Sprühtrocknung, Bandtrocknung oder Wirbelschichttrocknung zur Trockene überführt wird.

11. Verwendung einer pulverförmigen Pigmentzubereitung nach mindestens einem der Ansprüche 1 bis 8 zum Pigmentieren einer wäßrigen Dispersionsfarbe oder eines Putzes.

## Claims

1. A pulverulent pigment preparation comprising
a) an organic or inorganic pigment,
b) a compound from the group consisting of novolaks, bisphenol polyglycol ethers, alkoxylated fatty alcohols, alkoxylated fatty amines or the esterification and/or arylation products prepared from a natural or modified castor oil fatty compound, which are alkoxylated and, if desired, esterified with dicarboxylic acids to form linked structural repeating units,
c) a water-soluble mixture of polyvinyl alcohol and vinyl alcohol or of vinyl alcohol copolymers, and
d) further customary additives, the sum of all components being 100% by weight.

2. A pulverulent pigment preparation as claimed in claim 1, consisting of
from 25 to 80% by weight, preferably from 35 to 70% by weight, of component a),
from 3 to 40% by weight, preferably from 10 to 30% by weight, of component b),
from 2 to 40% by weight, preferably from 10 to 30% by weight, of component c), and
from 0 to 7% by weight, preferably from 2 to 5% by weight, of component d).

3. A pulverulent pigment preparation as claimed in claim 1 or 2, wherein the pigment is an inorganic oxide pigment or a monoazo, disazo, laked azo, benzimidazolone, naphthol, isoindolinone, isoindoline, phthalocyanine, quinacridone, perylene, perinone, thioindigo, quinophthalone, dioxazine or diketopyrrolopyrrole pigment.

4. A pulverulent pigment preparation as claimed in at least one of claims 1 to 3, wherein component b) is an alkylphenol novolak polycol ether, a bisphenol polyglycol ether or an esterified and alkoxylated castor oil fatty compound consisting of from 1 to 10 units of the formula (Ia) 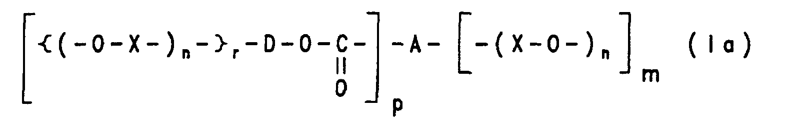 from 1 to 72 monovalent radicals of the formula (Ib)
- Z (Ib),
and additionally, where two or more units of the formula (Ia) are present, of from 1 to 9 divalent groups of the formula (Ic)
- CO-E-CO- (Ic),
each of the free valencies indicated in the formula units (Ia) being defined such that independently of the others it is attached directly to in each case one formula unit (Ib) or one valency of the formula unit (Ic), and, in the formula units (Ia) to (Ic)
A is the radical of a natural or modified castor oil or the radical of a natural or modified ricinoleic acid;
D is a direct bond or a divalent radical of a straight-chain or branched dihydric to hexahydric alcohol having 2 to 8 carbon atoms or a divalent radical of an alkylolamine HO- (CH₂)ᵥ-[NH-(CH₂)ᵤ]ₐ-NH₂, 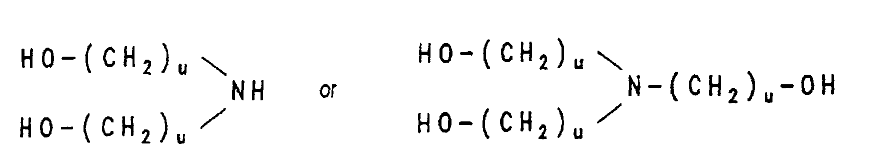
in which a is an integer from 0 to 4,
u and v are identical or different and are integers from 2 to 14
and each, or some of, the OH, NH or NH₂ groups is or are alkoxylated;
E is a straight-chain, branched or cyclic aliphatic radical having 0 to 20 carbon atoms;
an aromatic radical having 6 to 10 carbon atoms;
an alkenyl radical based on a dimerized, unsaturated C₂₈-C₇₂ fatty acid;
or a group of the formula -CH=CH-, -CH₂CH(SO₃M)- or -CH(SO₃M)CH₂-, where M is a cation;
X is a group of the formula -CH₂CH₂-, -CH(CH₃)CH₂- or -CH₂CH(CH₃)-, or a combination thereof;
Z is at each occurrence an identical or different radical Z¹ to Z⁶, where
Z¹ is hydrogen,
Z² is an acyl radical of the formula R¹-CO- in which R¹ is a phenyl, naphthyl or hydroxynaphthyl radical,
Z³ is an acyl radical of an unmodified or modified natural resin acid,
Z⁴ is an acyl radical of a di- or tricarboxylic acid based on a dimerized or trimerized C₂₈-C₇₂ fatty acid, or an acyl radical of a saturated or unsaturated C₈-C₂₂ fatty acid,
Z⁵ is at each occurrence an identical or different radical of the formula -CO-(CH₂)_{q}-COOM, -CO-CH=CH-COOM, -CO-CH₂-CH(SO₃M)-COOM, -CO-CH(SO₃M)-CH₂-COOM or -OC-C₆H₄-COOM, where q is an integer from 0 to 10, and
where M is hydrogen; an alkali metal; one equivalent of an alkaline earth metal; an oxyalkyl radical of the formula (X-O-)ₙH; an ammonium group which is unsubstituted or substituted by from one to four C₁-C₅-alkyl radicals or from one to four C₂-C₅-alkylol radicals; an ammonium group which is obtained from ammonia or from C₁-C₅-alkylamines or C₂-C₅-alkylolamines by addition reaction with from 1 to 150 ethylene oxide units or propylene oxide units or with a combination of ethylene oxide units and propylene oxide units; or a group of the formula (II) 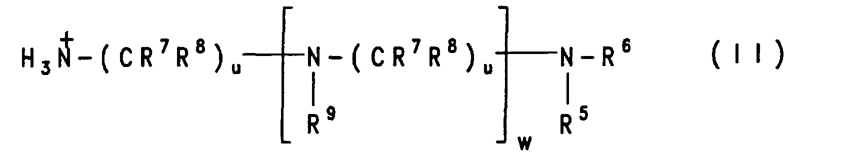 in which R⁹, R⁵ and R⁶ are identical or different and are each a hydrogen atom or a hydroxyalkyl group having 1 to 6 carbon atoms, and R⁷ and R⁸ are identical or different and are each hydrogen or methyl, u is identical or different at each occurrence and is an integer from 2 to 14, and w is an integer from zero to 25; or where M is a group of the formula (III) 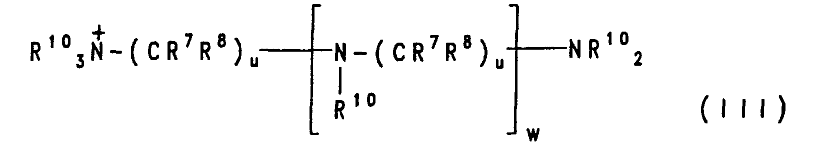 where R¹⁰ is the group H(-O-X-)_{y}, where X is as defined above and y is an integer from 1 to 100,
m if A is a ricinoleic acid radical, is 1, and if A is a castor oil radical, is 1 or 2,
n is a number from 1 to 250,
p if A is a castor oil, is 0, and if A is a ricinoleic acid radical, is 1, and
r is a number from 1 to 6,
and in which at least one radical Z from the group Z², Z³, Z⁴ and Z⁵ is attached in the manner of an ester to A; or in which at least two units of the formula (Ia) are linked to one another via a divalent group of the formula (Ic), and Z is as defined for Z¹ to Z⁵.

5. A pulverulent pigment preparation as claimed in claim 4, wherein the esterified and alkoxylated castor oil fatty compound contains 1 to 5 units of the formula (Ia) in which
A is the radical of a natural or modified castor oil and p is therefore 0,
X is -CH₂CH₂- and
n is an integer from 5 to 125, preferably from 10 to 80.

6. A pulverulent pigment preparation as claimed in claim 4, wherein the esterified and alkoxylated castor oil fatty compound contains 1 to 5 units of the formula (I) in which
A is the radical of a natural or modified ricinoleic acid and p is 1,
D is a divalent radical of a straight-chain or branched dihydric to hexahydric alcohol having 2 to 6 carbon atoms or of a C₂-C₃-alkylolamine, C₂-C₃-alkylol-C₂-C₃-alkylenediamine, C₂-C₃-alkylol-di-C₂-C₃-alkylenetriamine or C₂-C₃-alkylol-tri-C₂-C₃-alkylenetetramine,
X is -CH₂CH₂- and
n is an integer from 5 to 125, preferably from 10 to 80.

7. A pulverulent pigment preparation as claimed in at least one of claims 1 to 6, wherein component b) is castor oil rosin ester ethoxylate disulfosuccinic monoester, di-rosin-castor oil ethoxylate sulfosuccinate, castor oil rosin ester alkoxylate dimaleic monoester or its triethylenetetramine salt, castor oil ethoxylate succinic ester ethoxylate rosin ester sulfosuccinate or a castor oil rosin glycerol mixed ester.

8. A pulverulent pigment preparation as claimed in at least one of claims 1 to 7, wherein component c) is a partially hydrolyzed polyvinyl alcohol with a degree of hydrolysis of from 70 to 92 mol% or a partially or completely hydrolyzed copolymer of alkylvinyl ester and vinyl acetate with proportions of alkylvinyl ester of from 5 to 20 mol%.

9. A process for the preparation of a pulverulent pigment preparation as claimed in at least one of claims 1 to 8, which comprises converting the pigment into a finely divided state in an aqueous or aqueous-organic medium by continuous or discontinuous grinding or kneading, the components mentioned under b), c) and d) being added before, during or after the process of fine division, and converting the resulting finely divided pigment dispersion to the dry state by an appropriate process to obtain a fine, flowable powder.

10. The process as claimed in claim 9, wherein the finely divided pigment dispersion is converted to the dry state by spray drying, belt drying or fluidized-bed drying.

11. A method of using a pulverulent pigment preparation as claimed in at least one of claims 1 to 8 for pigmenting an aqueous emulsion paint or a plaster.

## Revendications

1. Préparation pigmentaire pulvérulente contenant
a) un pigment organique ou inorganique,
b) un composé pris dans le groupe des novolaques, des éthers de bisphénol et de polyglycol, des alcools gras alkoxylés, des amines grasses alkoxylées, ou des produits d'estérification et/ou d'arylation préparés à partir d'un corps gras à base d'huile de ricin naturelle ou modifiée, qui sont alkoxylés et éventuellement reliés par estérification à des acides dicarboxyliques pour donner des unités récurrentes,
c) un mélange hydrosoluble de poly(alcool vinylique) et d'alcool vinylique ou de copolymères d'alcool vinylique et
d) éventuellement d'autres matières d'addition usuelles,
la somme des composants donnant 100 %.

2. Préparation pigmentaire pulvérulente selon la revendication 1, constituée
de 25 à 80 % en masse, de préférence de 35 à 70 % en masse, du composant a),
de 3 à 40 % en masse, de préférence de 10 à 30 % en masse, du composant b),
de 2 à 40 % en masse, de préférence de 10 à 30 % en masse, du composant c) et
de 0 à 7 % en masse, de préférence de 2 à 5 % en masse, du composant d).

3. Préparation pigmentaire pulvérulente selon la revendication 1 ou 2, **caractérisée en ce que** le pigment est un pigment du type oxyde inorganique, un pigment monoazoïque, disazoïque, azoïque sous forme de laque insoluble, de benzimidazolone, de naphtol, d'isoindolinone, d'isoindoline, de phtalocyanine, de quinacridone, de pérylène, de périnone, de thioindigo, de quinophtalone, de dioxazine ou un pigment de dicétopyrrolopyrrole.

4. Préparation pigmentaire pulvérulente selon la revendication 1 ou 3, **caractérisée en ce que** le composant b) est un éther d'alkylphénolnovolaque et de polyglycol, un éther de bisphénol et de polyglycol ou un corps gras estérifié et alkoxylé à base d'huile de ricin constitué
de 1 à 10 unités de formule (Ia) 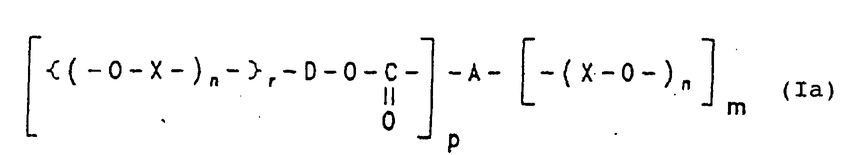 de 1 à 72 restes monovalents de formule (Ib)
-Z (Ib),
et dans le cas de présence de deux ou plusieurs unités de formule (Ia) de plus
de 1 à 9 groupes bivalents de formule (Ic)
-CO-E-CO (Ic),
chacune des valences libres montrées dans les unités de formule (Ia) étant définie de façon telle qu'elle soit reliée chaque fois directement, indépendamment, à une unité de formule (Ib) ou à une valence de l'unité de formule (Ic), et les unités de formule (Ia) à (Ic) représentant
A le reste d'une huile de ricin naturelle ou modifiée ou le reste d'un acide ricinoléique naturel ou modifié ;
D une liaison directe ou un reste bivalent d'un alcool linéaire ou ramifié à fonctionnalité 2 à 6 présentant 2 à 8 atomes de carbone ou un reste bivalent d'une alkylolamine
HO-(CH₂)ᵥ-[NH-(CH₂)ᵤ]ₐ-NH₂, 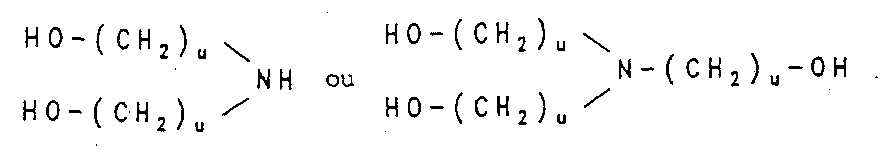
où
a représente un entier de 0 à 4,
u et v sont identiques ou différents et représentent un entier de 2 à 14,
et tous ou une partie des groupes OH, NH ou NH₂ étant alkoxylés ;
E représente un reste aliphatique à chaîne droite, ramifiée ou cyclique présentant de 0 à 20 atomes de carbone ;
un reste aromatique présentant de 6 à 10 atomes de carbone ;
un reste alcényle à base d'un acide gras en C₂₈-C₇₂ insaturé, dimérisé ;
ou un groupe de formules -CH=CH-, -CH₂CH(SO₃M)- ou -CH(SO₃M)CH₂-, où M représente un cation ;
X représente un groupe de formules -CH₂-CH₂-, -CH(CH₃)CH₂- ou -CH₂CH(CH₃)- ou une combinaison de ces groupes ;
Z représente des restes Z¹ à Z⁶ identiques ou différents, où
Z¹ représente un atome d'hydrogène,
Z² représente un reste acyle de formule R¹-CO-, dans laquelle R¹ représente un reste phényle, naphtyle ou hydroxynaphtyle,
Z³ représente un reste acyle d'un acide résinique naturel non modifié ou modifié,
Z⁴ représente un reste acyle d'un acide di- ou tricarboxylique à base d'un acide gras en C₂₈-C₇₂ di- ou trimérisé ou un reste acyle d'un acide gras en C₈-C₂₂ saturé ou insaturé,
Z⁵ représente des restes identiques ou différents de formules -CO-(CH₂)_{q}-COOM, -CO-CH=CH-COOM, -CO-CH₂-CH(SO₃M)-COOM, -CO-CH(SO₃M)-CH₂-COOM et -OC-C₆H₄-COOM, où q est un entier de 0 à 10,
où M représente un atome d'hydrogène ; un métal alcalin, un équivalent d'un métal alcalino-terreux ; un reste alkoxy de formule (X-O)ₙH ; un groupe ammonium, qui est non substitué ou substitué par un à quatre restes alkyle en C₁-C₅ ou un à quatre restes alkylol en C₂-C₅ ; un groupe ammonium obtenu à partir d'ammoniac ou d'alkylamines en C₁-C₅ ou d'(alkylol en C₁-C₅)amines par addition de 1 à 150 unités oxyde d'éthylène ou oxyde de propylène ou d'une combinaison d'unités oxyde d'éthylène et oxyde de propylène ;
ou un groupe de formule (II) 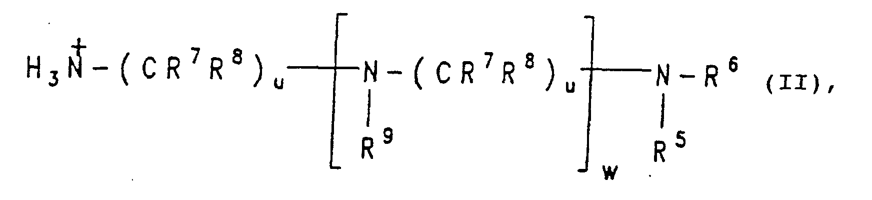 où
R⁹, R⁵ et R⁶ sont identiques ou différents et représentent un atome d'hydrogène ou un groupe hydroxyalkyle présentant 1 à 6 atomes de carbone et
R⁷ et R⁸ sont identiques ou différents et représentent un atome d'hydrogène ou un groupe méthyle,
u sont chaque fois identiques ou différents et sont un entier de 2 à 14 et
w est un entier de zéro à 25 ;
ou dans laquelle M représente un groupe de formule (III) 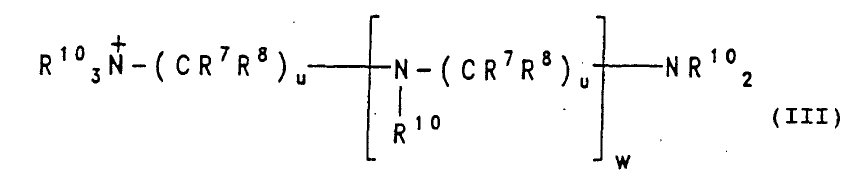 où
R¹⁰ représente le groupe H(-O-X-)_{y}, où X possède la signification précitée et y est un entier de 1 à 100,
m dans le cas où A représente un reste acide ricinoléique, vaut 1, et dans le cas où A représente un reste huile de ricin, vaut 1 ou 2,
n est un entier de 1 à 250,
p dans le cas où A est une huile de ricin, vaut 0, et dans le cas où A est un reste acide ricinoléique, vaut 1 et
r va de 1 à 6,
et au moins l'un des restes Z du groupe Z², Z³, Z⁴ et Z⁵ étant lié à A par une liaison du type ester ; ou au moins deux unités de formule (Ia) étant reliées entre elles par l'intermédiaire d'un groupe bivalent de formule (Ic) et Z possède les significations de Z¹ à Z⁵.

5. Préparation pulvérulente selon la revendication 4, **caractérisée en ce que** le corps gras estérifié et alkoxylé à base d'huile de ricin contient de 1 à 5 unités de formule (Ia), où
A représente le reste d'une huile de ricin naturelle ou modifiée et par conséquent, p vaut zéro,
X représente un groupe -CH₂CH₂- et
n est un entier de 5 à 125, de préférence de 10 à 80.

6. Préparation pigmentaire pulvérulente selon la revendication 4, **caractérisée en ce que** le corps gras estérifié et alkoxylé à base d'huile de ricin contient 1 à 5 unités de formule (I), où
A représente le reste d'une huile de ricin naturelle ou modifiée et p vaut 1,
D représente un reste bivalent d'un alcool à chaîne droite ou ramifiée 2 à 6 fonctionnel présentant 2 à 6 atomes de carbone ou d'une (alkylol en C₂-C₃)-amine, d'une (alkylol en C₂-C₃)-(alkylène en C₂-C₃)-diamine, d'une (alkylol en C₂-C₃)-di-(alkylène en C₂-C₃)triamine ou d'une (alkylol en C₂-C₃)-tri(alkylène en C₂-C₃)tétramine,
X représente un groupe -CH₂CH₂- et
n est un entier de 5 à 125, de préférence de 10 à 80.

7. Préparation pigmentaire pulvérulente selon au moins l'une des revendications 1 à 6, **caractérisée en ce que** le composant b) est un ester d'huile de ricin-colophane-éthoxylate-hémi-ester de l'acide di-sulfosuccinique, un éthoxylate-sulfosuccinate de di-colophane-huile de ricin, un ester d'huile de ricin-colophane-alkoxylate-hémi-ester de l'acide di-maléique ou son sel de triéthylènetétramine, ester de l'acide succinique-huile de ricin-éthoxylate-ester de colophane-éthoxylate-sulfosuccinate ou un ester mixte d'huile de ricin-colophane-glycérine.

8. Préparation pigmentaire pulvérulente selon au moins l'une des revendications 1 à 7, **caractérisée en ce que** le composant c) est un poly(alcool vinylique) partiellement hydrolysé ayant un degré d'hydrolyse de 70 à 92 % molaires ou un copolymère partiellement ou entièrement saponifié d'ester alkylvinylique et d'acétate de vinyle présentant des taux en ester alkylvinylique de 5 à 20 % molaires.

9. Procédé pour la préparation d'une préparation pigmentaire pulvérulente selon au moins l'une des revendications 1 à 8, **caractérisé en ce qu'**on transforme le pigment en un état de division fine par broyage ou malaxage en continu ou en discontinu dans un milieu aqueux ou aqueux-organique, les composants indiqués aux points b), c) et d) étant ajoutés avant, au cours ou après l'opération de division fine, et on transforme la dispersion de pigment finement divisé ainsi obtenue au moyen d'un procédé approprié en obtenant une poudre fine, coulable, par séchage jusqu'à siccité totale.

10. Procédé selon la revendication 9, **caractérisé en ce qu'**on transforme la dispersion de pigment finement divisée par séchage par pulvérisation, séchage sur bande ou séchage en lit fluidisé jusqu'à siccité totale.

11. Utilisation d'une préparation pigmentaire pulvérulente selon au moins l'une des revendications 1 à 8 pour la pigmentation d'une peinture-dispersion aqueuse ou d'un enduit.
